# DEMANDE DE BREVET EUROPEEN

(11) **EP 3 300 589 A1**
(43) Date de publication de la demande: **04.04.2018**
(21) Numéro de dépôt: 17306152.4
(22) Date de dépôt: 06.09.2017
(51) Int. Cl.: A01F 29/00, A01K 5/00

(54) **MACHINE DE DISTRIBUTION PAR PROJECTION DE PRODUITS À BRINS COURTS OU LONGS**

(30) Priorité: 28.09.2016 FR 1659173
(71) Demandeur: Kuhn-Audureau SA, 85260 La Copechagnière (FR)
(72) Inventeur: PETERSCHMITT, Mickaël, 85300 LE PERRIER (FR); ROGER, Christophe, 85000 LA ROCHE SUR YON (FR)
(74) Mandataire: Nuss, Laurent

(57) **Abrégé**

La présente invention a pour objet une machine de distribution par projection de produits en brins longs ou courts, cette machine comprenant une benne (2) et un fond (4) et pourvue, d'au moins un moyen démêleur (5, 5') et d'un organe rotatif de projection (6) monté dans un carter avec une ouverture d'alimentation (7'), cet organe de projection rotatif (6) est disposé en aval du ou des moyen(s) démêleur(s) (5, 5') dans la direction d'avance (A) des produits et dans un plan perpendiculaire à cette direction et tournant autour d'un axe de rotation parallèle à cette direction (A).

Machine (1) caractérisée en ce qu'elle comprend également au moins un moyen déflecteur (10, 11) pour dévier au moins une partie latérale du flux (F) de produit se déplaçant vers l'organe rotatif de projection (6), en direction du centre de la benne (2) et/ou vers l'ouverture d'alimentation (7').

## Description

La présente invention concerne le domaine des équipements agricoles, plus particulièrement les machines agricoles, plus particulièrement les machines agricoles réalisant ou intégrant une fonction de distribution avec projection à distance des produits conditionnés sous forme de balles, de bottes ou en silo, et a pour objet une machine de distribution présentant un rendement amélioré.

Les machines agricoles visées par la présente invention consistent en une machine de distribution par projection de produits à brins courts ou longs, notamment de produits conditionnés en balles, en bottes ou en silo.

Une telle machine comprend généralement une benne avec au moins deux parois latérales opposées et un fond et pourvue, au niveau de l'une de ses extrémités longitudinales, d'au moins un moyen démêleur et d'un organe rotatif de projection monté dans un carter avec une ouverture d'alimentation, ladite benne étant également équipée d'un moyen de déplacement des produits disposés dans la benne progressivement, selon une direction d'avance, vers le ou les moyen(s) démêleur(s), de manière à alimenter l'organe de projection rotatif, en coopération avec ce(s) dernier(s).

Cet organe de projection rotatif est disposé en aval du ou des moyen(s) démêleur(s) dans la direction d'avance des produits et dans un plan perpendiculaire à cette direction et tournant autour d'un axe de rotation parallèle à cette direction.

Généralement, le ou chaque démêleur se présente sous la forme d'un rouleau pourvu de couteaux, s'étendant transversalement dans la benne et rotatif autour d'un axe horizontal. Un tel démêleur a pour fonction de démêler et de séparer les paquets de produits (fourrage, paille) et d'alimenter l'organe rotatif de projection, par exemple sous forme de disques à pales, tournant autour d'un axe perpendiculaire à l'axe du ou des démêleur(s). L'ouverture d'alimentation de l'organe de projection rotatif est grande pour que tous types de produits amenés par le démêleur puissent être absorbés.

Des machines agricoles du type évoqué ci-dessus sont en particulier commercialisées par la déposante sous les désignations ALTOR, ATHENOR et PRIMOR (marques déposées).

Or, les inventeurs ont constaté à l'usage et en fonction des applications, que l'action de l'organe rotatif de projection (compte tenu de son sens de rotation et du flux d'air créé), provoquaient des accumulations de produit dans certaines régions de la benne, en particulier des coins inférieurs de la benne au niveau de l'ouverture d'alimentation de l'organe de projection et/ou au niveau d'extrémité(s) latérale(s) du ou des démêleur(s) (proches des parois latérales de la benne).

Ces accumulations créent des encombrements qui perturbent le flux de produit à distribuer et empêche de distribuer ou de projeter la totalité du produit.

De plus, au niveau de ces zones d'encombrement de produits, le flux d'air produit est également perturbé et une partie de l'air comprimé par l'action de l'organe rotatif, et destiné à entrainer le flux de produit dans la goulotte d'éjection, à tendance à s'échapper du carter et à souffler le produit vers l'intérieur de la benne.

La présente invention a pour but, par le biais d'une solution simple et peu coûteuse, ne mettant en oeuvre aucun organe actif ou mobile et pouvant avantageusement être mise en oeuvre constructivement, avec une intensité variable, en fonction des moyens prévus, pour surmonter les limitations de l'état de la technique précité.

A cet effet, l'invention a pour objet une machine de distribution du type évoqué ci-dessus, caractérisée en ce qu'elle comprend également au moins un moyen déflecteur pour dévier au moins une partie latérale du flux de produit se déplaçant vers l'organe rotatif de projection, en direction du centre de la benne et/ou vers l'ouverture d'alimentation. Ainsi l'introduction du produit dans l'organe rotatif de projection est améliorée.

L'invention sera mieux comprise, grâce à la description ci-après, qui se rapporte à des modes de réalisation préférés, donnés à titre d'exemples non limitatifs, et expliqués avec référence aux dessins schématiques annexés, dans lesquels :
la figure 1 est une vue en perspective d'une machine de distribution selon un mode de réalisation de l'invention, sous forme de pailleuse distributrice, une des parois latérales de la benne étant enlevée;
la figure 2A est une vue similaire à celle de la figure 1, les moyens démêleurs et un des moyens déflecteurs étant en outre enlevés ;
la figure 2B est une vue en élévation, selon la direction de déplacement des produits dans la benne, de l'objet représenté figure 2A, les deux parois de la benne étant enlevées ;
la figure 3 est une vue de détail, en élévation latérale et à une échelle différente de la partie inférieure avant de la pailleuse représentée figure 1 ;
la figure 4 est une vue partielle de dessus de la partie avant (partie arrière dans le sens de déplacement des produits dans la benne) de la pailleuse représentée figure 1, les moyens démêleurs étant enlevés ;
les figures 5A à 5D, 6A à 6D et 7A à 7D sont des vues en perspective selon plusieurs directions de trois moyens déflecteurs différents pouvant être mis en oeuvre, séparément ou de manière combinée, dans une machine distributrice selon l'invention, comme ressortant des figures 1 à 4.

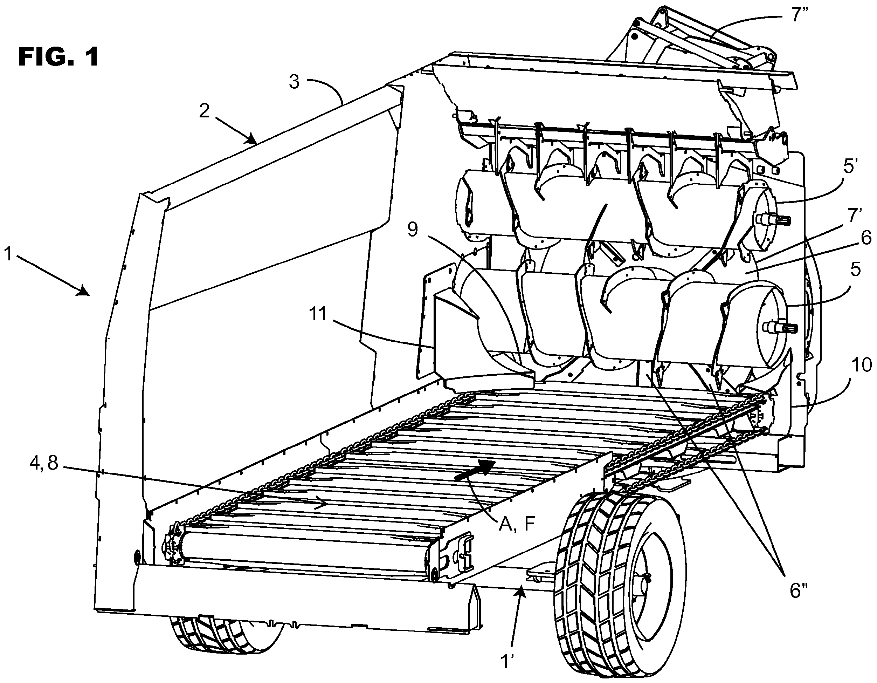

Les figures 1 à 4 illustrent, au moins partiellement, une machine 1 de distribution par projection de produits en brins longs ou courts, notamment de produits conditionnés en balles, en bottes ou en silo.

Cette machine 1 comprend une benne 2 avec au moins deux parois latérales opposées 3, 3' et un fond 4 et pourvue, au niveau de l'une de ses extrémités longitudinales, d'au moins un moyen démêleur 5, 5' et d'un organe rotatif de projection 6 monté dans un carter 7 avec une ouverture d'alimentation 7' (et par exemple un conduit ou une goulotte d'éjection 7"), ladite benne 2 étant également équipée d'un moyen 8 de déplacement des produits disposés dans la benne 2 progressivement, selon une direction d'avance A, vers le ou les moyen(s) démêleur(s) 5, 5', de manière à alimenter l'organe de projection rotatif 6, en coopération avec ce(s) dernier(s).

Ledit organe de projection rotatif 6 est disposé en aval du ou des moyen(s) démêleur(s) 5, 5' dans la direction d'avance A des produits et dans un plan perpendiculaire à cette direction et tournant autour d'un axe de rotation 6' parallèle à cette direction A.

Les figures 1 à 4 illustrent une machine distributrice 1 sous forme de pailleuse distributrice avec une ouverture d'introduction située à l'arrière de la machine, par laquelle les paquets de produit sont introduits dans la benne 2, et avec des moyens démêleurs 5, 5' et un organe de projection 6 montés à l'avant de la machine 1, à l'opposé de l'ouverture d'introduction.

Les parois latérales 3 et 3' peuvent être reliées ou non au fond 4. Elles peuvent également soit s'arrêter en partie inférieure au niveau dudit fond 4, soit se prolonger au-delà dudit fond vers le bas.

Conformément à l'invention, ladite machine 1 comprend également au moins un moyen déflecteur 9, 10, 11 pour dévier au moins une partie latérale du flux F de produit se déplaçant vers l'organe rotatif de projection 6, cette déviation s'effectuant en direction du centre de la benne 2 et/ou vers l'intérieur de l'ouverture d'alimentation 7'.

En prévoyant au moins un moyen 9, 10, 11 statique et fixe dans une région proche de l'ouverture d'alimentation 7', et donc de la sortie des produits de la benne 2, apte à corriger la direction de déplacement d'une partie au moins du flux F pour optimiser un acheminement vers ladite ouverture 7' et éviter la création de zones d'encombrement de produits, l'invention fournit une solution simple, efficace et peu coûteuse pour surmonter les principales limitations évoquées précédemment.

Avantageusement, et comme le montrent également les figures précitées, le ou chaque moyen déflecteur 9, 10, 11 est situé dans une région angulaire intérieure 12, 12', 12" de la benne 2, qui est délimitée conjointement, d'une part, par une portion de zone de bord latéral du fond 4 et, d'autre part, par une portion inférieure d'une paroi latérale 3, 3', s'étendant en regard et au-dessus dudit fond 4. Ce positionnement particulier du moyen 9, 10, 11 permet d'aboutir dans le contexte de l'invention à un effet recherché maximisé même pour une taille limitée et un encombrement modeste, voire réduit(e), dudit moyen.

Le ou chaque moyen déflecteur 9, 10, 11 fournit une surface fonctionnelle de guidage et de déviation 9', 10', 11' et forme avantageusement, vue dans la direction A de déplacement des produits ou d'avance, une formation saillante vers l'intérieur du volume de la benne 2 obstruant, à un emplacement longitudinal donné de la benne 2, au moins la zone de coin de la région angulaire 12, 12', 12" le recevant.

Plus précisément, le ou chaque moyen déflecteur 9, 10, 11 peut consister en une pièce rapportée ou en une déformation interne (préférentiellement très localisée) de la benne 2 avec une surface fonctionnelle 9', 10', 11' de guidage ou de déflexion incurvée concave, s'évasant dans la direction d'avance A des produits et formant, en projection orthogonale sur un plan perpendiculaire à ladite direction d'avance A, une surface avec sensiblement une forme triangulaire rectangle pourvue d'une hypoténuse concave.

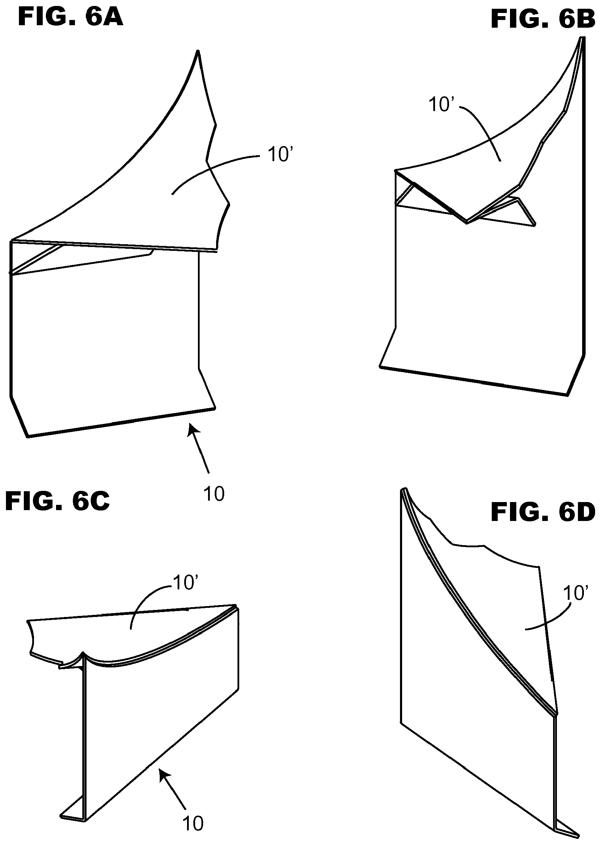

En accord avec un mode de réalisation pratique préféré de l'invention, ressortant des figures 1 à 7, le ou chaque moyen déflecteur 9, 10, 11 consiste en une pièce rapportée solidarisée rigidement avec une paroi latérale 3 ou 3' de la benne 2 et/ou avec le fond 4, ou un élément support du fond 4 ou du châssis 1' de la machine 1 (tel qu'un longeron ou une traverse), ladite pièce 9, 10, 11 comportant une portion de paroi constituant une surface 9', 10', 11' de guidage du flux F de produits, écartant localement et progressivement les produits en déplacement à distance du fond 4 et/ou de la paroi latérale 3, 3' concernée de la benne 2.

L'invention peut avantageusement prévoir, selon une variante constructive, que le ou chaque moyen déflecteur 9, 10, 11 présente une structure en forme de rampe incurvée à structure concave, avec une surface de guidage supérieure 9', 10', 11' s'écartant progressivement et simultanément, dans la zone de coin de la région angulaire 12, 12', 12" le recevant, d'une part, du fond 4 et, d'autre part, d'une paroi latérale 3, 3' de la benne 2, dans la direction d'avance A des produits.

Ainsi, chacun des moyens déflecteurs 9, 10, 11 constitue, au niveau de son endroit d'implantation dans la benne 2 et du fait de l'encombrement qu'il définit, un volume mort (de faible taille par rapport au volume intérieur de la benne) évitant des encombrements par accumulation de produit. De plus, par sa forme spécifique en rampe incurvée et effilée dans une direction opposée à la direction d'avance A, le ou chaque moyen 9, 10, 11 passif agit activement et progressivement sur une partie du flux F et la dévie du fond 4 et/ou d'un côté latéral de la benne 2 vers le centre.

Bien entendu, en fonction du mode et de l'intensité d'action envisagés sur le flux F des produits en déplacement, l'emplacement et le nombre des moyens déflecteurs 9, 10, 11 peut varier. En particulier, les effets de plusieurs moyens de ce type peuvent se cumuler. Toutefois, un unique moyen déflecteur 9, 10 ou 11 peut également être suffisant pour surmonter au moins l'inconvénient majeur découlant de l'état de la technique.

Ainsi, conformément à un premier mode de réalisation de l'invention, il peut être prévu qu'au moins un moyen déflecteur 11 soit situé, vu dans la direction d'avance A des produits, en amont, préférentiellement en regard et à proximité immédiate de l'une des extrémités du ou des moyen(s) démêleur(s) 5, 5' s'étendant en travers de la benne 2, par exemple sous forme de rouleau(x) équipés de couteaux.

Un tel moyen 11 permet de dévier le produit vers la région centrale des moyens démêleurs 5,5' et donc de l'organe rotatif de projection 6 et de l'ouverture d'alimentation 7' où l'effet d'aspiration de l'organe rotatif de projection est plus efficace.

En accord avec un second mode de réalisation de l'invention, il peut être prévu qu'au moins un moyen déflecteur 9, 10 soit situé, vu dans la direction d'avance A des produits, entre le ou les moyen(s) démêleur(s) 5, 5' et l'ouverture d'alimentation 7' du carter 7 de l'organe rotatif de projection 6, préférentiellement à proximité immédiate ou contre la paroi 14 du carter 7 comprenant l'ouverture d'alimentation 7' et au niveau du bord de cette dernière.

Ce ou ces moyen(s) déflecteur(s) 9, 10 situé(s) dans l'environnement immédiat de l'ouverture d'alimentation 7' évitent l'accumulation de produits dans des zones critiques d'interface entre la benne 2 et l'organe 6, résultat des effets conjugués de la gravité, du rebord de l'ouverture 7' dans la paroi 14 du carter 7, de la modification de la direction de déplacement des produits (direction A/direction d'éjection dans la goulotte) et de la modification d'une section rectangulaire ou carrée (section transversale de la benne 2) vers une section circulaire (volume balayé par l'organe rotatif 6).

Le ou chaque moyen déflecteur 9, 10 situé près de l'ouverture d'alimentation 7' peut en outre, de manière additionnelle ou alternative, participer à une optimisation du flux d'air produit par l'organe rotatif de projection 6 et limiter les déperditions réduisant son efficacité.

A cet effet, il peut additionnellement ou alternativement être prévu qu'au moins un moyen déflecteur 9, 10, situé près de la paroi du carter 7, soit positionné de manière à obstruer, partiellement ou totalement, au moins une zone locale périphérique 15, 15' de l'ouverture d'alimentation 7', située sensiblement en regard du fond 4 de la benne 2 et décalée (par rapport au centre de l'ouverture 7') latéralement vers l'une des parois latérales 3 ou 3' de ladite benne 2.

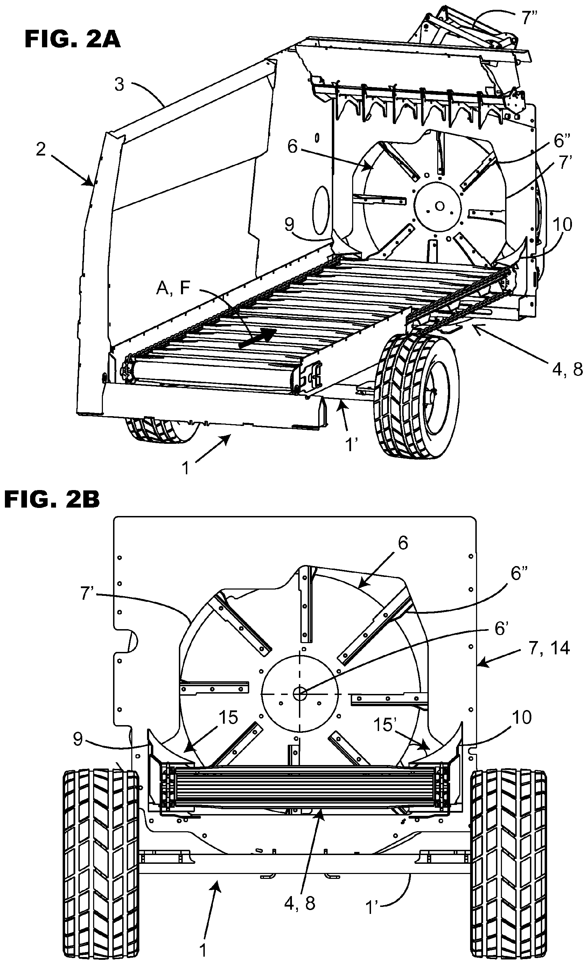

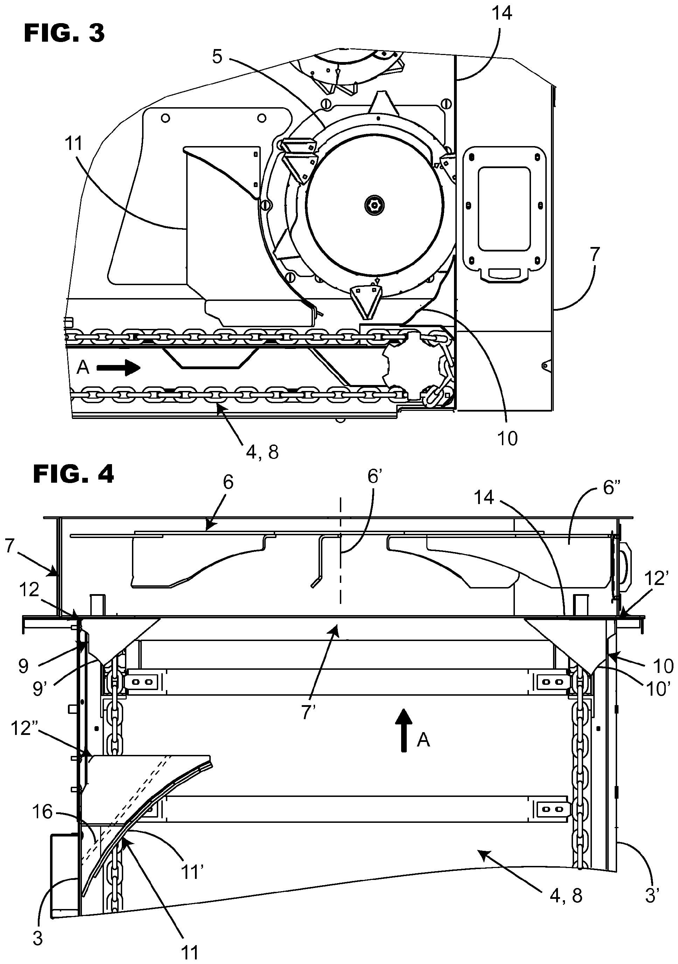

Selon une première variante représentée figures 2A, 2B et 4, un moyen déflecteur 9 est situé du côté de la paroi latérale 3 le long de laquelle l'organe rotatif de projection 6, du type disque à pales 6" radiales, présente un mouvement ascendant, préférentiellement au niveau du coin que forme en coopération cette paroi 3 avec le fond 4.

Selon une autre variante représentée figures 3 et 4, un deuxième moyen déflecteur 10 est situé du côté de la paroi latérale 3' le long de laquelle l'organe rotatif de projection 6 présente un mouvement descendant, préférentiellement au niveau du coin que forme en coopération cette paroi 3' avec le fond 4.

Bien entendu, la mise en oeuvre simultanée des trois moyens déflecteurs 9, 10 et 11 sur une même machine 1 est possible comme l'illustrent par exemple les figures 2 et 4. Néanmoins la mise en oeuvre prioritaire du moyen déflecteur 9 ou éventuellement du moyen déflecteur 11 est à privilégier, chacun de ces derniers pouvant être mis en oeuvre seul.

En accord avec une construction pratique avantageuse, l'ouverture d'alimentation 7' présente une section de passage de dimension inférieure à la section transversale intérieure de la benne 2 vue selon un plan perpendiculaire à la direction d'avance A des produits. De plus, une partie de l'organe rotatif de projection 6 et de l'ouverture d'alimentation 7' se situe sous le plan formé par la surface support du fond 4. En outre, l'ouverture d'alimentation 7' présente, préférentiellement dans une région située s'étendant sensiblement en regard et légèrement au-dessus de l'extrémité arrière du fond 4, deux découpes 15, 15' opposées s'étendant, chacune en direction d'une des parois latérales 3, 3' et constituant les zones locales périphériques précitées. Enfin, au moins un moyen déflecteur 9, 10 est arrangé pour obstruer au moins partiellement l'une desdites découpes 15, 15'.

En variante ou de manière additionnelle, le fond 4 de la benne 2 peut être constitué par un convoyeur, préférentiellement segmenté et à entrainement latéral par chaines, formant le moyen de déplacement 8, ou par une partie au moins de ce dernier. Grâce à la présence du (des) moyen(s) déflecteur(s) 9, 10, la quantité de produit qui a tendance à passer entre le démêleur 5 et l'organe rotatif de projection 6 et à être entrainé sous le convoyeur est réduite.

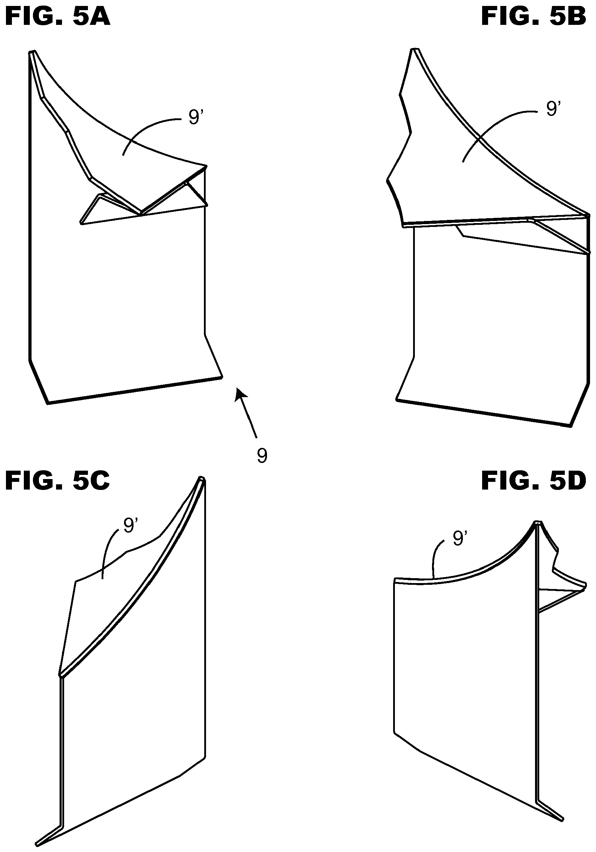

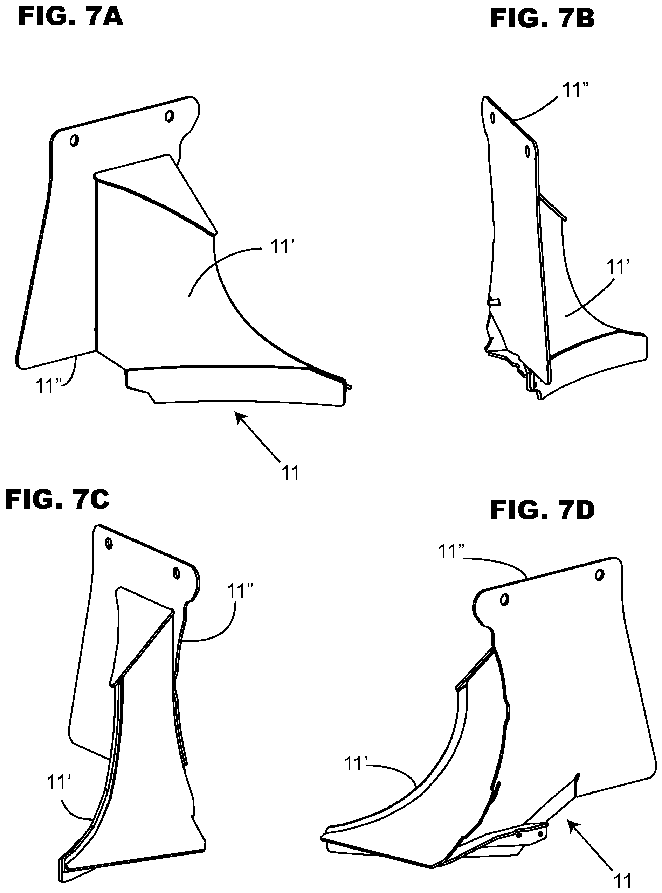

Comme l'illustrent à titre d'exemples les figures 5 à 7, et de manière supplémentaire les figures 2 et 4, chaque moyen déflecteur 9, 10, 11 consiste en une plaque de tôle pliée, comportant des portions de paroi 9', 10', 11' formant les surfaces de guidage et de déviation du flux F de produits. D'une manière avantageuse, les moyens déflecteurs 9 et 10 sont fixés par soudure sur la paroi latérale 3, 3' de la benne, en particulier au niveau de portions de paroi complémentaires des plaques de tôle respectives, destinées à leur montage et à leur fixation. Le moyen déflecteur 11 peut également comporter une portion de paroi 11" dédiées au montage et à la fixation, ainsi qu'éventuellement au moins une structure de renforcement 16 rapportées. Le moyen déflecteur 11 est représenté sous une forme de réalisation en caisson aux figures 7A à 7D.

Enfin, la machine 1 comprend préférentiellement un châssis 1' roulant et forme une machine à atteler, par exemple du type pailleuse distributrice.

Bien entendu, l'invention n'est pas limitée aux modes de réalisation décrits et représentés aux dessins annexés. Des modifications restent possibles, notamment du point de vue de la constitution des divers éléments ou par substitution d'équivalents techniques, sans sortir pour autant du domaine de protection de l'invention.

## Revendications

1. Machine de distribution par projection de produits en brins longs ou courts, notamment de produits conditionnés en balles, en bottes ou en silo,
cette machine comprenant une benne (2) avec au moins deux parois latérales (3, 3') opposées et un fond (4) et pourvue, au niveau de l'une de ses extrémités longitudinales, d'au moins un moyen démêleur (5, 5') et d'un organe rotatif de projection (6) monté dans un carter (7) avec une ouverture d'alimentation (7'), ladite benne (2) étant également équipée d'un moyen (8) de déplacement des produits disposés dans la benne (2) progressivement, selon une direction d'avance (A), vers le ou les moyen(s) démêleur(s) (5, 5'), de manière à alimenter l'organe de projection rotatif (6), en coopération avec ce(s) dernier(s),
ledit organe de projection rotatif (6) étant disposé en aval du ou des moyen(s) démêleur(s) (5, 5') dans la direction d'avance (A) des produits et dans un plan perpendiculaire à cette direction et tournant autour d'un axe de rotation (6') parallèle à cette direction (A),
machine (1) **caractérisée en ce qu'**elle comprend également au moins un moyen déflecteur (9, 10, 11) pour dévier au moins une partie latérale du flux (F) de produit se déplaçant vers l'organe rotatif de projection (6), en direction du centre de la benne (2) et/ou vers l'ouverture d'alimentation (7').

2. Machine selon la revendication 1, **caractérisée en ce que** le ou chaque moyen déflecteur (9, 10, 11) est situé dans une région angulaire intérieure (12, 12', 12") de la benne (2), qui est délimitée conjointement, d'une part, par une portion de zone de bord latéral du fond (4) et, d'autre part, par une portion inférieure d'une paroi latérale (3, 3'), s'étendant en regard et au-dessus dudit fond (4), ledit ou chaque moyen déflecteur (9, 10, 11) fournissant une surface fonctionnelle de guidage et de déviation (9', 10', 11') et formant avantageusement, vue dans la direction (A) de déplacement des produits ou d'avance, une formation saillante vers l'intérieur du volume de la benne (2) obstruant, à un emplacement longitudinal donné de la benne (2), au moins la zone de coin de la région angulaire (12, 12', 12") le recevant.

3. Machine selon l'une quelconque des revendications 1 et 2, **caractérisée en ce que** le ou chaque moyen déflecteur (9, 10, 11) consiste en une pièce rapportée ou en une déformation interne de la benne (2) avec une surface fonctionnelle (9', 10', 11') de guidage ou de déflexion incurvée concave, s'évasant dans la direction d'avance (A) des produits et formant, en projection orthogonale sur un plan perpendiculaire à ladite direction d'avance (A), une surface avec sensiblement une forme triangulaire rectangle pourvue d'une hypoténuse concave.

4. Machine selon l'une quelconque des revendications 1 à 3, **caractérisée en ce que** le ou chaque moyen déflecteur (9, 10, 11) consiste en une pièce rapportée solidarisée rigidement avec une paroi latérale (3 ou 3') de la benne (2) et/ou avec le fond (4), de la machine (1), ladite pièce (9, 10, 11) comportant une portion de paroi constituant une surface (9', 10', 11') de guidage du flux (F) de produits, écartant localement et progressivement les produits en déplacement à distance du fond (4) et/ou de la paroi latérale (3, 3') concernée de la benne (2).

5. Machine selon l'une quelconque des revendications 1 à 4, **caractérisée en ce que** le ou chaque moyen déflecteur (9, 10, 11) présente une structure en forme de rampe incurvée à structure concave, avec une surface de guidage supérieure (9', 10', 11') s'écartant progressivement et simultanément, dans la zone de coin d'une région angulaire (12, 12', 12") le recevant, d'une part, du fond (4) et, d'autre part, d'une paroi latérale (3, 3') de la benne (2), dans la direction d'avance (A) des produits.

6. Machine selon l'une quelconque des revendications 1 à 5, **caractérisée en ce qu'**au moins un moyen déflecteur (11) est situé, vu dans la direction d'avance (A) des produits, en amont, préférentiellement en regard et à proximité immédiate de l'une des extrémités du ou des moyen(s) démêleur(s) (5, 5') s'étendant en travers de la benne (2), par exemple sous forme de rouleau(x) avec couteaux.

7. Machine selon l'une quelconque des revendications 1 à 6, **caractérisée en ce qu'**au moins un moyen déflecteur (9, 10) est situé, vu dans la direction d'avance (A) des produits, entre le ou les moyen(s) démêleur(s) (5, 5') et l'ouverture d'alimentation (7') du carter (7) de l'organe rotatif de projection (6), préférentiellement à proximité immédiate ou contre la paroi (14) du carter (7) comprenant l'ouverture d'alimentation (7') et au niveau du bord de cette dernière.

8. Machine selon l'une quelconque des revendications 1 à 6, **caractérisée en ce qu'**au moins un moyen déflecteur (9, 10) est positionné de manière à obstruer, partiellement ou totalement, au moins une zone locale périphérique (15, 15') de l'ouverture d'alimentation (7'), située sensiblement en regard du fond (4) de la benne (2) et décalée latéralement vers l'une des parois latérales (3 ou 3') de ladite benne (2).

9. Machine selon l'une quelconque des revendications 1 à 8, **caractérisée en ce qu'**un moyen déflecteur (9) est situé du côté de la paroi latérale (3) le long de laquelle l'organe rotatif de projection (6), du type disque à pales (6") radiales, présente un mouvement ascendant, préférentiellement au niveau du coin que forme en coopération cette paroi (3) avec le fond (4).

10. Machine selon l'une quelconque des revendications 1 à 8, **caractérisée en ce qu'**un autre ou deuxième moyen déflecteur (10) est situé du côté de la paroi latérale (3') le long de laquelle l'organe rotatif de projection (6) présente un mouvement descendant, préférentiellement au niveau du coin que forme en coopération cette paroi (3') avec le fond (4).

11. Machine selon l'une quelconque des revendications 1 à 10, **caractérisée en ce que** l'ouverture d'alimentation (7') présente une section de passage de dimension inférieure à la section transversale intérieure de la benne (2) vue selon un plan perpendiculaire à la direction d'avance (A) des produits, **en ce qu'**une partie de l'organe rotatif de projection (6) et de l'ouverture d'alimentation (7') se situe sous le plan formé par la surface support du fond (4), et **en ce que** l'ouverture d'alimentation (7') présente, préférentiellement dans une région située s'étendant sensiblement en regard et légèrement au-dessus de l'extrémité arrière du fond (4), deux découpes (15, 15') opposées s'étendant, chacune en direction d'une des parois latérales (3, 3') et constituant des zones locales périphériques de l'ouverture 7', et **en ce qu'**au moins un moyen déflecteur (9, 10) est arrangé pour obstruer au moins partiellement l'une desdites découpes (15, 15').

12. Machine selon l'une quelconque des revendications 1 à 11, **caractérisée en ce qu'**elle comprend un châssis (1') roulant et forme une machine à atteler, par exemple du type pailleuse distributrice.
